# EUROPEAN PATENT SPECIFICATION

(11) **EP 2 100 269 B1**
(45) Date of publication and mention of the grant of the patent: **21.02.2018**
(21) Application number: 07869390.0
(22) Date of filing: 17.12.2007
(51) Int. Cl.: G06T 11/00, G06T 15/50, G09G 5/14, G09G 5/399

(54) **USING SUPPLEMENTARY INFORMATION OF BOUNDING BOXES IN MULTI-LAYER VIDEO COMPOSITION**
VERWENDUNG ZUSÄTZLICHER INFORMATIONEN VON ZEICHEN-BOXEN IN EINER MEHRSCHICHTIGEN VIDEOZUSAMMENSETZUNG
UTILISATION D'INFORMATIONS SUPPLÉMENTAIRES DE ZONES DE DÉLIMITATION DANS UNE COMPOSITION VIDÉO MULTICOUCHE

(30) Priority: 29.12.2006 US 648397
(43) Date of publication of application: 16.09.2009
(73) Proprietor: Intel Corporation, Santa Clara, CA 95054 (US)
(72) Inventor: JIANG, Hong, El Dorado Hills, California 95762 (US)
(74) Representative: Maiwald Patentanwalts GmbH
(86) International application number: PCT/US2007/087822
(87) International publication number: WO 2008/082940

(56) References cited:
- WO-A1-2005/048592
- WO-A2-2006/030401
- US-A1- 2004 189 645
- US-A1- 2004 189 667
- US-A1- 2004 189 668
- US-A1- 2005 140 694
- TORBORG J ET AL: "TALISMAN: COMMODITY REALTIME 3D GRAPHICS FOR THE PC", COMPUTER GRAPHICS PROCEEDINGS 1996 (SIGGRAPH). NEW ORLEANS, AUG. 4 - 9, 1996; [COMPUTER GRAPHICS PROCEEDINGS (SIGGRAPH)], NEW YORK, NY : ACM, US, 4 August 1996 (1996-08-04), pages 353-363, XP000682751,

## Description

### BACKGROUND

Implementations of the claimed invention generally may relate to multiple-layer video composition, and the processing of graphics and subpicture information therein.

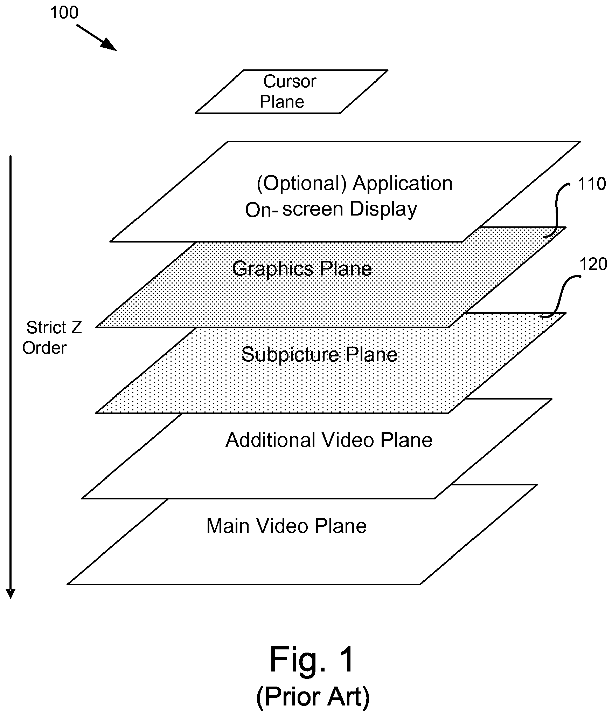

Greater interactivity has been added to newer, high-definition video playback systems such as HD DVD and Blu-Ray. For example, as shown in Fig. 1, an HD DVD system 100 may require a player to support four (or more) layers of video and graphics planes to be composed. Each such layer may have per-plane and/or per-pixel alpha values (for specifying an amount of translucency). Graphics plane 110, for example, may be rendered from file cache at an appropriate rate, and may have per-pel alpha translucency. Subpicture plane 120, for example, may be rendered from file cache at an appropriate rate or within 30 mpbs total, and may have per-pel alpha and/or plane alpha translucency values. For completeness, the main video plane may include high definition video (e.g., 1080i60 at <29.97 mbps), and the additional video plane may include standard definition video (e.g., 480i60 at <4-6 mbps).

Graphics &/or subpicture planes 110/120 may dominate bandwidth and workload for the composition engine (also referred to as a compositor). A player that needs to support per-pixel compositing of full size planes 110/120 may consume a significant portion of the total available read/write bandwidth. Such compositing may also place a major power burden on mobile platforms, for example.

Many usages demand large graphics planes. Some applications tend to place graphics on peripheral areas (e.g., top drop curtains, bottom popup menus, foot notes, subtitles with graphics logos placed at a distance). In many cases, most graphics and/or subpicture pixels are transparent. If, for example, 90% of pixels in planes 110/120 are transparent, 60-70% of composition bandwidth and throughput may be spent unnecessarily.

By way of background information, reference is made to International Patent Application WO 2006/030401 A2, entitled "Multi-Layer Video/Graphics Blending Including Identifying Composited Non-Transparent Regions in the Alpha Multiplied Overlay", published 23 March 2006, which too has addressed the problem of saving computational resources/energy when compositing video and graphics/sub-picture information. As disclosed therein, composited non-transparent regions in a video/graphics overlay are identified during colour conversion and alpha blending. Individual non-transparent regions are merged into larger such regions if not separated by at least a predetermined distance. Regions that are so determined are blended with target regions in the main video plane. Transparent regions are not blended with the main video data, thereby reducing the computational and memory bandwidth requirements.

By way of background information, reference is also made to International Patent Application WO 2005/048592 A1, entitled "Recording Medium, Playback Apparatus and Method, Recording Method and Computer Readable Program" published 26 May 2005, which discloses video/graphics layer structure similar to that which is described herein with reference to figure 1 of the accompanying drawings.

### SUMMARY OF THE INVENTION

The present invention is defined in the appended independent claims to which reference should be made. Advantageous features are set out in the appended dependent claims.

### BRIEF DESCRIPTION OF THE DRAWINGS

The accompanying drawings, which are incorporated in and constitute a part of this specification, illustrate one or more implementations consistent with the principles of the invention and, together with the description, explain such implementations. The drawings are not necessarily to scale, the emphasis instead being placed upon illustrating the principles of the invention. In the drawings,
Fig. 1 illustrates a conventional high-definition layered video format;
Fig. 2 shows a system for compositing multi-layered video including graphical and/or subpicture information;
Fig. 3A conceptually illustrates bounding boxes and corresponding drawing rectangles for composition;
Fig. 3B conceptually illustrates the bounding boxes and drawing rectangles in graphics and composition areas; and
Fig. 4 illustrates a method of compositing using bounding boxes and drawing rectangles.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of the claimed invention. However, it will be apparent to those skilled in the art having the benefit of the present disclosure that the various aspects of the invention claimed may be practiced in other examples that depart from these specific details. In certain instances, descriptions of well known devices, circuits, and methods are omitted so as not to obscure the description of the present invention with unnecessary detail.

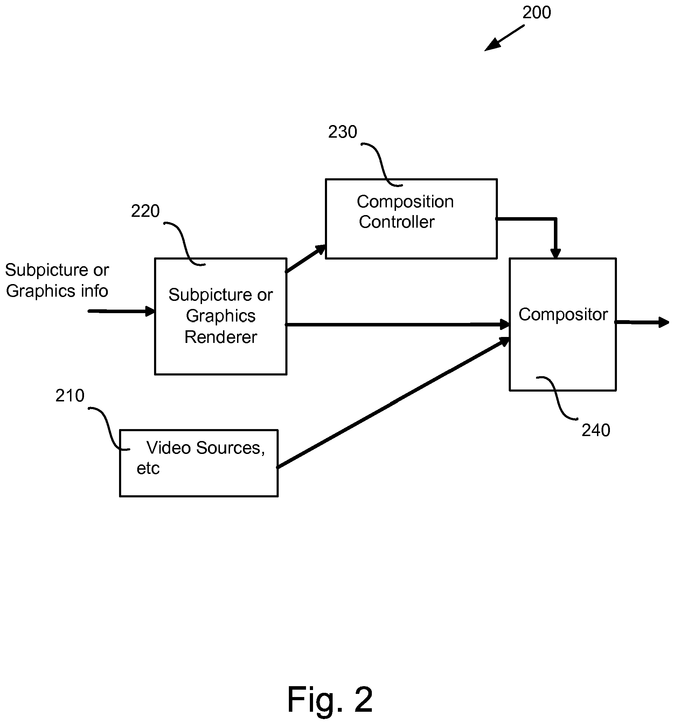

Fig. 2 shows a system 200 for compositing multi-layered video including graphical and/or subpicture information. System 200 may include a source 210 of video information, such as a main video plane and/or an additional video plane (which may also be referred to as a sub video plane). Source 210 may output its plane(s) of video information to a compositor 240 for composition with subpicture and/or graphics information.

System 200 may also include a subpicture or graphics renderer 220. Renderer 220 may include one or both of a subpicture renderer and a graphics renderer. Accordingly, renderer 220 may receive a subpicture bitstream and/or graphics language and control information, depending on what is to be rendered. It should be noted that renderer 220 may include two functionally separate renderers for subpicture and graphics, but it is illustrated as one element in Fig. 2 for ease of explanation. In some implementations, renderer 220 may render an entire graphical plane 110 and/or subpicture plane 120 and output such to compositor 240.

In addition to outputting rendered subpictures and/or graphical planes to compositor 240, renderer 220 may also output messages to composition controller containing bounding information (e.g., bounding boxes or drawing rectangles). Such bounding information may specify a spatial extent of non-transparent subpictures or graphical objects that are output to compositor, as will be explained in greater detail below. It should be noted that such bounding information may be considered "supplementary," meaning that if it is not present, the whole graphics and/or subpicture planes will be drawn or rendered by renderer 220 and composited by compositor 240.

Composition controller 230 may receive the bounding information from renderer 220 and control the processing of the subpicture and/or graphics information by compositor 240 based on it. For example, controller 230 may instruct compositor 240 not to composite any information from renderer 220 that is outside certain boundaries (e.g., bounding boxes that will be described further below), indicating that such "out of bounds" subpicture and/or graphics information is transparent (or sufficiently close to transparent to be treated as such).

Controller 230 may also be arranged to map the bounding information from, for example, the graphics or subpicture planes (e.g., planes 110 and/or 120) where rendered to the composition area where the various layers of information are composited. For example, information in the graphics or subpicture planes may be appropriately scaled by controller 230 if it is rendered in a different resolution/size than that of the composition area. Similarly, information in the graphics or subpicture planes may be shifted or offset by controller 230 if its boundary or reference position (e.g., upper left corner) when rendered is in a shifted or offset location from the corresponding boundary or reference position of the composition area. Such scaling and/or offsetting may be accomplished in some implementations by an appropriate scaling and/or offset instruction from controller 230 to compositor 240, which may actually perform the scaling and/or offsetting.

Compositor 240 may be arranged to combine video information from source 210 with subpicture and/or graphics planes from renderer 220 based on commands and/or instructions from composition controller. In particular, compositor 240 may composite only such graphical or subpicture information in the area(s) specified by controller 230. The remaining information in planes 110/120 outside the bounding areas may be transparent, and may be ignored by compositor 240. Compositor 240 may be arranged to composite information on a per-pixel basis, although other granularities (e.g., per block) may also be considered. Although not explicitly shown in Fig. 2, compositor 240 may output composited video information to a frame buffer and/or a connected display (not shown) for visual representation to a user of the system 200.

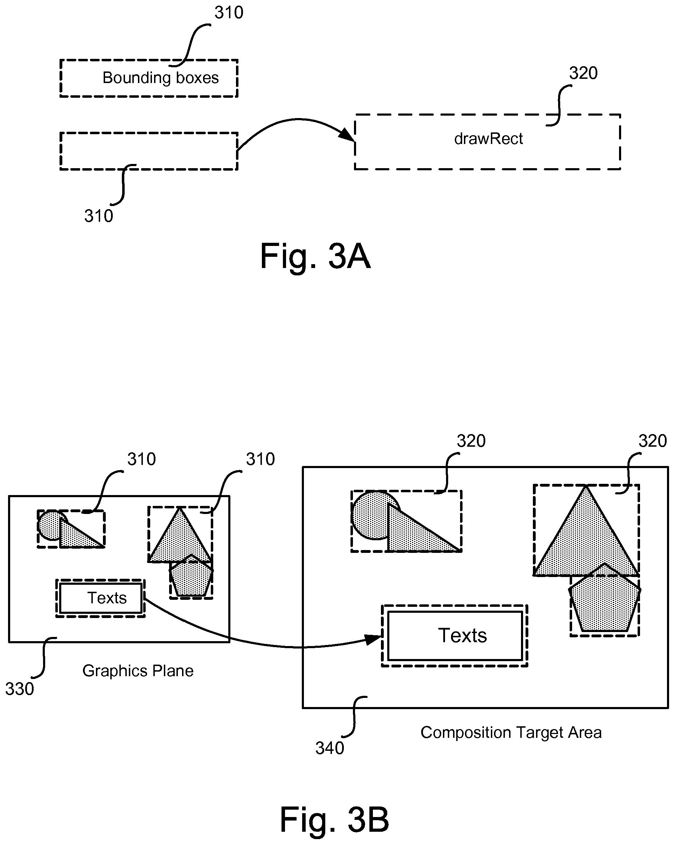

Fig. 3A conceptually illustrates bounding boxes 310 and corresponding drawing rectangles ("drawRects") 320 for composition. Fig. 3B conceptually illustrates the bounding boxes 310 and drawing rectangles 320 in a graphics plane 330 and a composition target area 340. In Fig. 3B, the graphical objects bounded by the bounding boxes 310 and drawRects 320 are also shown to aid in understanding. By convention, those areas outside boxes 310 and drawRects 320 may be considered transparent (or nearly so) and not composited by compositor 240, for example.

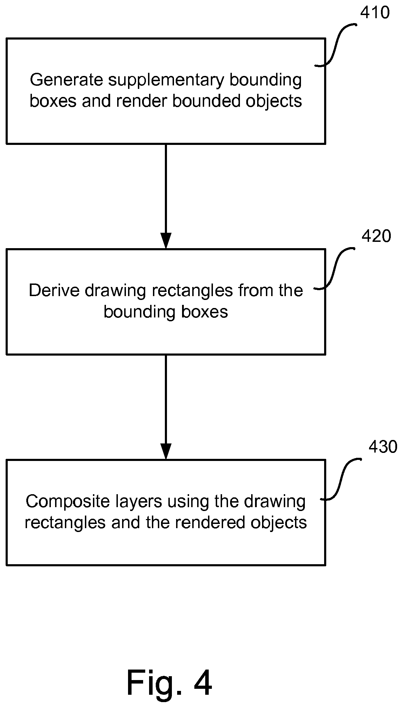

Fig. 4 illustrates a method of compositing using bounding boxes 310 and drawing rectangles 320. Although described with respect to Figs. 2, 3A, and 3B for ease of explanation, the scheme described in Fig. 4 should not be construed as limited to the particulars of these other figures.

A first portion this method entails identifying the transparent areas (e.g., using bounding boxes for the non-transparent areas) in graphics and/or subpicture planes. This may include translucency at pixel level for subpicture plane and translucency and placements of texts and texture maps in the graphics plane. Specifically, supplementary bounding boxes (Bboxes) may be generated for the non-transparent areas in these graphics/subpicture planes of interest [act 410]. Multiple Bboxes may describe regions containing non-transparent pixels within the graphics and/or subpicture planes. Bbox(), which may be sent from renderer 220 to controller 230, is described based on the source plane coordinates (e.g., those of the graphics plane). Bboxes should be non-overlapping to facilitate instructions to compositor 240. As stated earlier, Bboxes are "supplementary," because if they are not present, the whole plane of interest will be drawn.

Such bounding box information may either be identified within act 410: 1) by the player during graphics/subpicture plane decoding time, or 2) during render time by renderer 220. Alternately, the bounding box information may be provided directly in the graphical or subpicture content. A scheme for identifying bounding box information in act 410 according to the first "decoding time" active technique may be found in the related application serial no. 11/584,903 referenced above and incorporated by reference. As described therein, during decoding, bounding boxes may be defined by adjacent lines of data that each include non-transparent pixels.

A scheme for identifying bounding box information in act 410 according to the second "render time" active technique may be to use a tiled render in renderer 220 and to use the tile as a building block of the bounding box detection. When a graphics or subpicture plane is rendered on a tile by tile basis, a translucency detector is typically present. When a whole tile contains only transparent pixels (e.g., determined via an alpha detector and/or an object coverage detector within the translucency detector), the tile is marked as transparent. Alternately, when non-transparent pixels are present, the perimeter of such a tile is designated as a Bbox 310. Such tile-based bounding may be used composition by compositor 240 via instructions from controller 230. However the Bboxes 310 are determined, act 410 may produce at least one, and in some implementations multiple disjoint, Bboxes 310 for a graphics and/or subpicture plane. Bboxes 310 should be large enough to enclose any non-transparent objects, but should not extend much beyond an area sufficient to enclose such objects, as shown in Fig. 3B.

In addition to generating supplementary bounding boxes 310, act 410 may also render per-plane objects (e.g., the shapes and text in Fig. 3B). In some implementations, act 410 performed by renderer 220 may also generate a scaling factor for the planes 110 and/or 120. In other implementations, however composition controller 230 may generate the scaling factor, for example, in conjunction with act 420.

Processing may continue with controller 230 deriving the drawing rectangles (drawRects) 320 from the bounding boxes 310 [act 420]. Each drawRect 320 may contain the destination position in the composition area for the drawRect 320 and the source region in the graphics or subpicture plane of the corresponding Bbox 310. Each drawRect may be pixel aligned to the destination and hence may contain fractional positions in the source. The fractional source regions should include the original bboxes 310 for any disjoint borders of bboxes. This is important "bookkeeping" to take care of adjacent bboxes 310 in order to deliver identical results as would be obtained without using bboxes 310.

Processing may continue with compositor 240 using drawRects 320 from controller 230 to composite the layers of video and rendered planes 110/120 from renderer 220 [act 430]. In particular, compositor 240 may only composite those areas of planes 110/120 that fall within drawRects 320, saving considerable processing by not compositing transparent areas for these planes. Although not explicitly shown in Fig. 4, act 430 may also include outputting composited video information to a frame buffer and/or a connected display (not shown) for visual representation of the composited information to a user.

The above-described scheme and apparatus may advantageously provide composition of multiple layers with video information without compositing areas (e.g., transparent graphical and/or subpicture information) that would not visually affect the composited output. Bounding boxes may be used as supplementary information in such as scheme for pre -rendered large planes with per-pixel alpha values that may also be scaled. Such may provide significant composition performance improvements and power savings, enabling somewhat low power requirements for small and/or mobile platforms to be met.

The foregoing description of one or more implementations provides illustration and description, but is not intended to be exhaustive or to limit the scope of the invention to the precise form disclosed. Modifications and variations are possible in light of the above teachings or may be acquired from practice of various implementations of the invention.

## Claims

1. An apparatus (200) for compositing graphical information with video, comprising:
a source (210) of planes of video information;
a renderer (220) to provide a rendered graphical plane (110);
a composition controller (230) connected to the renderer (220) to control compositing of the rendered graphical plane (110); and
a compositor (240) connected to the source (210), the renderer (220), and the composition controller (230) to composite the planes of video information and the rendered graphical plane (110) based on control information from the composition controller (230);
**characterised in that**:
the renderer (220) is arranged to generate at least one bounding box (310) during tile-based rendering of the graphical plane (110), each said at least one bounding box (310) enclosing any non-transparent graphical objects;
the renderer (22) is further arranged to identify those tiles that contain only transparent pixels; and
the composition controller (230) is configured to control compositing by the compositor (240) such that the graphical information within the identified transparent tiles is not composited with the planes of video information.

2. The apparatus of claim 1, wherein the source provides planes of video information including a high definition plane of video information and a standard definition plane of video information.

3. The apparatus of claim 1, wherein the composition controller (230) is arranged to scale the at least one bounding box (310) to corresponding at least one drawing rectangle (320) to be used by the compositor (240).

4. A method of compositing graphical information with video comprising:
rendering a plane of graphical information which includes:
generating at least one bounding box (310) during tile-based rendering of the graphical plane (110), each said at least one bounding box (310) enclosing any non-transparent graphical objects; and
identifying those tiles that contain only transparent pixels; and
compositing planes of the video and the rendered graphical plane (110) such that the graphical information within the identified transparent tiles is not composited with the planes of the video.

5. An apparatus for compositing subpicture information with video, comprising:
a source of planes of video information;
a renderer to provide a rendered subpicture plane;
a composition controller connected to the renderer to control compositing of the rendered subpicture plane; and
a compositor connected to the source, the renderer, and the composition controller to composite the planes of video information and the rendered subpicture plane based on control information from the composition controller:
**characterised in that**:.
the renderer (220) is arranged to generate at least one bounding box (310) during tile-based rendering of the graphical plane (110), each said at least one bounding box (310) enclosing any non-transparent subpicture objects; the renderer (22)) is further arranged to identify those tiles that contain only transparent pixels; and
the composition controller (230) is configured to control compositing by the compositor (240) such that the subpicture information within the identified transparent tiles is not composited with the planes of video information.

6. The apparatus of claim 5, wherein the source provides planes of video information including a high definition plane of video information and a standard definition plane of video information.

## Patentansprüche

1. Einrichtung (200) zum Zusammensetzen von Grafikinformationen mit einem Video, die Folgendes umfasst:
eine Quelle (210) von Ebenen von Videoinformationen;
einen Renderer (220) zum Bereitstellen einer gerenderten Grafikebene (110);
eine Zusammensetzungssteuerung (230), die mit dem Renderer (220) verbunden ist, um das Zusammensetzen der gerenderten Grafikebene (110) zu steuern; und
einen Zusammensetzer (240), der mit der Quelle (210), dem Renderer (220) und der Zusammensetzungssteuerung (230) verbunden ist, um die Ebenen von Videoinformationen und die gerenderte Grafikebene (110) basierend auf Steuerinformationen von der Zusammensetzungssteuerung (230) zusammenzusetzen;
**dadurch gekennzeichnet, dass**:
der Renderer (220) dazu eingerichtet ist, wenigstens einen begrenzenden Kasten (310) während des kachelbasierten Renderns der Grafikebene (110) zu erzeugen, wobei jeder des wenigstens einen begrenzenden Kastens (310) beliebige nichttransparente Grafikobjekte einschließt;
der Renderer (22) ferner dazu eingerichtet ist, jene Kacheln zu identifizieren, die nur transparente Pixel enthalten; und
die Zusammensetzungssteuerung (230) dazu konfiguriert ist, das Zusammensetzen durch den Zusammensetzer (240) so zu steuern, dass die Grafikinformationen innerhalb der identifizierten transparenten Kacheln nicht mit den Ebenen von Videoinformationen zusammengesetzt werden.

2. Einrichtung nach Anspruch 1, wobei die Quelle Ebenen von Videoinformationen einschließlich einer Hochauflösungsebene von Videoinformationen und einer Standardauflösungsebene von Videoinformationen bereitstellt.

3. Einrichtung nach Anspruch 1, wobei die Zusammensetzungssteuerung (230) dazu eingerichtet ist, den wenigstens einen begrenzenden Kasten (310) so zu skalieren, dass er wenigstens einem Zeichenrechteck (320) entspricht, das durch den Zusammensetzer (240) zu verwenden ist.

4. Verfahren zum Zusammensetzen von Grafikinformationen mit einem Video, das Folgendes umfasst:
Rendern einer Ebene von Grafikinformationen, was Folgendes beinhaltet:
Erzeugen wenigstens eines begrenzenden Kastens (310) während des kachelbasierten Renderns der Grafikebene (110), wobei jeder des wenigstens einen begrenzenden Kastens (310) beliebige nichttransparente Grafikobjekte einschließt; und
Identifizieren jener Kacheln, die nur transparente Pixel enthalten; und
Zusammensetzen von Ebenen des Videos und der gerenderten Grafikebene (110), so dass die Grafikinformationen innerhalb der identifizierten transparenten Kacheln nicht mit den Ebenen des Videos zusammengesetzt werden.

5. Einrichtung zum Zusammensetzen von Unterbildinformationen mit einem Video, die Folgendes umfasst:
eine Quelle von Ebenen von Videoinformationen;
einen Renderer zum Bereitstellen einer gerenderten Unterbildebene;
eine Zusammensetzungssteuerung, die mit dem Renderer verbunden ist, um das Zusammensetzen der gerenderten Unterbildebene zu steuern; und
einen Zusammensetzer, der mit der Quelle, dem Renderer und der Zusammensetzungssteuerung verbunden ist, um die Ebenen von Videoinformationen und die gerenderte Unterbildebene basierend auf Steuerinformationen von der Zusammensetzungssteuerung zusammenzusetzen;
**dadurch gekennzeichnet, dass**:
der Renderer (220) dazu eingerichtet ist, wenigstens einen begrenzenden Kasten (310) während des kachelbasierten Renderns der Grafikebene (110) zu erzeugen, wobei jeder des wenigstens einen begrenzenden Kastens (310) beliebige nichttransparente Unterbildobjekte einschließt;
der Renderer (22) ferner dazu eingerichtet ist, jene Kacheln zu identifizieren, die nur transparente Pixel enthalten; und
die Zusammensetzungssteuerung (230) dazu konfiguriert ist, das Zusammensetzen durch den Zusammensetzer (240) so zu steuern, dass die Unterbildinformationen innerhalb der identifizierten transparenten Kacheln nicht mit den Ebenen von Videoinformationen zusammengesetzt werden.

6. Einrichtung nach Anspruch 5, wobei die Quelle Ebenen von Videoinformationen einschließlich einer Hochauflösungsebene von Videoinformationen und einer Standardauflösungsebene von Videoinformationen bereitstellt.

## Revendications

1. Appareil (200) destiné à composer des informations graphiques avec de la vidéo, comprenant :
une source (210) de plans d'informations vidéo ;
un moteur de rendu (220) pour fournir un plan graphique rendu (110) ;
un contrôleur de composition (230) relié au moteur de rendu (220) pour contrôler la composition du plan graphique rendu (110) ; et
un moteur de composition (240) relié à la source (210), au moteur de rendu (220) et au contrôleur de composition (230) pour composer les plans d'informations vidéo et le plan graphique rendu (110) sur la base d'informations de contrôle provenant du contrôleur de composition (230) ;
**caractérisé en ce que** :
le moteur de rendu (220) est agencé pour générer au moins un rectangle englobant (310) pendant un rendu à base de pavés du plan graphique (110), chaque dit au moins un rectangle englobant (310) encerclant tous objets graphiques non transparents ;
le moteur de rendu (22) est également agencé pour identifier les pavés qui contiennent uniquement des pixels transparents ; et
le contrôleur de composition (230) est configuré pour contrôler la composition par le moteur de composition (240) de telle sorte que les informations graphiques à l'intérieur des pavés transparents identifiés ne soient pas composées avec les plans d'informations vidéo.

2. Appareil de la revendication 1, dans lequel la source fournit des plans d'informations vidéo comportant un plan d'informations vidéo à haute définition et un plan d'informations vidéo de définition standard.

3. Appareil de la revendication 1, dans lequel le contrôleur de composition (230) est agencé pour proportionner l'au moins un rectangle englobant (310) à au moins un rectangle de dessin correspondant (320) devant être utilisé par le moteur de composition (240).

4. Procédé de composition d'informations graphiques avec de la vidéo comprenant :
le rendu d'un plan d'informations graphiques qui comporte :
la génération d'au moins un rectangle englobant (310) pendant un rendu à base de pavés du plan graphique (110), chaque dit au moins un rectangle englobant (310) encerclant tous objets graphiques non transparents ;
l'identification des pavés qui contiennent uniquement des pixels transparents ; et
la composition de plans de la vidéo et du plan graphique rendu (110) de telle sorte que les informations graphiques à l'intérieur des pavés transparents identifiés ne soient pas composées avec les plans de la vidéo.

5. Appareil destiné à composer des informations de sous-image avec de la vidéo, comprenant :
une source de plans d'informations vidéo ;
un moteur de rendu pour fournir un plan de sous-image rendu ;
un contrôleur de composition relié au moteur de rendu pour contrôler la composition du plan de sous-image rendu ; et
un moteur de composition relié à la source, au moteur de rendu et au contrôleur de composition pour composer les plans d'informations vidéo et le plan de sous-image rendu sur la base d'informations de contrôle provenant du contrôleur de composition ;
**caractérisé en ce que** :
le moteur de rendu (220) est agencé pour générer au moins un rectangle englobant (310) pendant un rendu à base de pavés du plan graphique (110), chaque dit au moins un rectangle englobant (310) encerclant tous objets de sous-image non transparents ;
le moteur de rendu (22) est également agencé pour identifier les pavés qui contiennent uniquement des pixels transparents ; et
le contrôleur de composition (230) est configuré pour contrôler la composition par le moteur de composition (240) de telle sorte que les informations de sous-image à l'intérieur des pavés transparents identifiés ne soient pas composées avec les plans d'informations vidéo.

6. Appareil de la revendication 5, dans lequel la source fournit des plans d'informations vidéo comportant un plan d'informations vidéo à haute définition et un plan d'informations vidéo de définition standard.
